# EUROPÄISCHE PATENTSCHRIFT

(11) **EP 2 031 291 B1**
(45) Veröffentlichungstag und Bekanntmachung des Hinweises auf die Patenterteilung: **16.03.2011**
(21) Anmeldenummer: 08162591.5
(22) Anmeldetag: 19.08.2008
(51) Int. Cl.: F16L 37/088, F16L 37/092, F16L 33/22

(54) **Steckfitting für ein Kunststoff aufweisendes Rohr**
Insert fitting for a tube comprising plastic material
Raccord de connexion pour un tuyau comprenant une matière synthétique

(30) Priorität: 01.09.2007 DE 102007041598
(43) Veröffentlichungstag der Anmeldung: 04.03.2009
(73) Patentinhaber: Uponor Innovation AB, 513 81 Fristad (SE)
(72) Erfinder: Zischke, Georg, 97332, Volkach (DE)
(74) Vertreter: Epping - Hermann - Fischer

(56) Entgegenhaltungen:
- EP-A1- 1 258 666
- WO-A1-2006/033815
- GB-A- 2 174 468

## Beschreibung

Die Erfindung betrifft einen Steckfitting für ein Kunststoff aufweisendes Rohr, bei dem es sich beispielsweise um ein Kunststoffrohr oder ein Kunststoff-Metall-Verbundrohr handelt.

Im Stand der Technik existieren eine Vielzahl von Fittingen für den Anschluss von Rohren. Neben Pressfittingen, bei denen auf das Rohr plastisch verformbare Presshülsen aufgepresst oder die Rohre selbst, d.h. ohne eine Presshülse, gegen eine Stützhülse gepresst werden, existieren auch Klemmfittinge und Schiebehülsenfittinge. All diesen Fittingtypen gemeinsam ist, dass für die Erzeugung der der Zugentlastung dienenden Haltekräfte über das Einschieben bzw. Aufschieben des Rohres in oder auf den Fittingkörper weitere Maßnahmen erforderlich sind.

Neben den zuvor genannten Fittingsystemen existieren auch sogenannte Steckfittinge, bei denen die Haltekräfte automatisch beim Einstecken des Rohres in einen Aufnahmeraum des Fittingkörpers erzeugt werden. Hierbei existieren Steckfittinge, bei denen die Halte- bzw. Rückhaltekräfte durch nach Art von Widerhaken wirkenden Verkrallungselementen erzeugt werden, die entweder an der Innenseite oder der Außenseite des angeschlossenen Rohres angreifen und damit das Rohr beschädigen könnten. Beispiele für die zuvor genannten Steckfittinge finden sich in DE 1 269 849, DE 602 01 659 T2, EP 0 667 481 B1, EP 1 258 666 A1, EP 1 146 275 B1 und EP 1 564 473 A1.

Daneben existieren Steckfittinge, bei denen die Rückhaltekraft durch außenliegende, keilförmige Elemente erzeugt wird, die mit zunehmender Zugkraft immer stärker von außen gegen das angeschlossene Rohr gedrückt werden. Beispiele für diese Art von Steckfittingen finden sich in DE 195 10 193 A1, DE 296 21 046 U1, DE 299 14 160 U1, EP 0 655 577 B1 und GB 2 174 468 A. Auch bei diesen bekannten Steckfittingen besteht die Gefahr der Beschädigung des Rohres.

Aufgabe der Erfindung ist es, einen Steckfitting für ein Kunststoff aufweisendes Rohr zu schaffen, der über einen verbesserten Rückhaltemechanismus verfügt.

Zur Lösung dieser Aufgabe wird mit der Erfindung ein Steckfitting für ein Kunststoff aufweisendes Rohr vorgeschlagen, wobei der Steckfitting versehen ist mit
- einem Fittingkörper, der einen Durchlass für ein Medium und einen um den Durchlass herum angeordneten, von dem Durchlass durch ein Innenhülsenelement des Fittingkörpers getrennten, im wesentlichen ringförmigen Anschlussbereich aufweist, auf oder in den das Ende eines anzuschließenden Rohres auf- bzw. hineinschiebbar ist,
- einem Klemmkörper, der im oder am Fittingkörper angeordnet ist und radial in Richtung auf den Anschlussbereich vorgespannt ist,
- einem in dem Anschlussbereich axial verschiebbar angeordneten Freigabeelement zum Freigeben des Klemmkörpers,
- einem axial verschiebbar am Fittingkörper gelagerten Keilelement zur Anlage an dem Klemmkörper und
- einem Federelement zur axialen relativen Verschiebung von Klemmkörper und Keilelement bei freigegebenem Klemmkörper,
- wobei das Freigabeelement einen Mitnehmerteil für das anzuschließende Rohr zur Mitnahme des Freigabeelements durch das anzuschließende Rohr beim Auf- oder Hineinschieben desselben auf bzw. in den Anschlussbereich zwecks Freigabe des Klemmkörpers und kraftschlüssiger Anlage desselben an dem anzuschließenden Rohr aufweist.

Nach der Erfindung ist vorgesehen, die Haltekraft für die Zugentlastung des an den Steckfitting angeschlossenen Rohres durch einen Klemmkörper aufzubringen, der radial gegen das Rohr vorgespannt ist und demzufolge mit einer gewissen Andrückkraft zur kraftschlüssigen Verbindung an dem Rohr anliegt. Der Klemmkörper ist im wesentlichen axial fixiert an dem Fittingkörper angeordnet und wirkt überdies mit einem Keilelement des Steckfittings zusammen, das eine auf das Rohr zulaufende Keilfläche aufweist, an der der Klemmkörper anliegt.

In seiner Ausgangsstellung ist der Klemmkörper an dem Fittingkörper außerhalb des Anschlussbereichs angeordnet, ragt also in diesen nicht hinein bzw. ragt in denjenigen Teil des Anschlussbereichs nicht hinein, der bei eingeschobenem Rohr von diesem eingenommen wird. Beim Ein- bzw. Aufschieben des Rohres wird nun das Freigabeelement mittels des Rohres axial bewegt. Dadurch wird der Klemmkörper, der zuvor vom Freigabeelement zur Sicherung gegen eine Bewegung auf Grund seiner Vorspannung im vorgespannten Zustand gehalten ist, freigegeben, so dass er nun in Anlage mit dem Rohr gelangt. Gegen den an das Rohr andrückenden Klemmkörper wird nun das Keilelement gedrückt bzw. alternativ kann auch der Klemmkörper axial gegen das Keilelement gedrückt werden, was durch Federkraft erfolgt. Diese Federkraft wird zweckmäßigerweise erst dann freigegeben, wenn der Klemmkörper klemmend an dem Rohr anliegt, also nicht mehr durch das Freigabeelement zurückgehalten ist.

Durch diese Art des Klemmmechanismus wird eine besonders schonende Zugentlastung realisiert. Zunächst einmal dient einzig und allein der Klemmkörper der Zugentlastung. Bei auf das Rohr wirkenden Zugkräften bewegt sich dieses zusammen mit dem Klemmkörper (sofern eine Relativbewegung des Rohres zum Steckfitting möglich ist) gegen die Keilfläche des Keilelements, wodurch der Klemmkörper immer stärker von außen (oder von innen) gegen das Rohr gedrückt wird. Außerdem entsteht bei Freigabe des Klemmkörpers und dessen Anschlagen gegen das Rohr ein akustisch wahrnehmbares Klickgeräusch, das dem Monteur den ordnungsgemäßen Anschluss des Rohres an den Fitting "meldet".

In vorteilhafter Weiterbildung der Erfindung ist vorgesehen, dass der Anschlussbereich als Aufnahmeraum ausgebildet ist, der nach innen durch das den Aufnahmeraum vom Durchlass trennende Innenhülsenelement und nach außen durch ein Außenhülsenelement begrenzt ist. Am Außenhülsenelement bzw. an dessen Innenseite sind nunmehr zweckmäßigerweise die einzelnen Elemente des Klemmmechanismus wie der Klemmkörper, das Freigabeelement, das Keilelement und das Federelement angeordnet bzw. bewegbar gelagert. Hierbei ist der Klemmkörper in seinem Vorspannung erzeugenden Zustand elastisch aufgeweitet, so dass er bei Freigabe automatisch den Kraftschluss mit dem angeschlossenen Rohr erzeugt.

Alternativ ist es möglich, die einzelnen Elemente des Klemmmechanismus an dem Innenhülsenelement vorzusehen, wobei ein Außenhülsenelement nicht zwingend erforderlich ist, der Anschlussbereich also um das Innenhülsenelement herum angeordnet ist. Hierbei ist dann der Klemmkörper elastisch gestaucht, um bei Freigabe aufzuweiten und dabei den Kraftschluss mit dem angeschlossenen Rohr zu erzeugen.

Der Klemmkörper ist zweckmäßigerweise als geschlitzter Klemmring aus elastisch verformbarem Metall, insbesondere Federstahl ausgebildet. Der Klemmring kann einen runden oder eckigen Querschnitt aufweisen. Andere Querschnitte des Klemmkörpers sind ebenfalls denkbar.

Zur Verbesserung der fluiddichten Abdichtung des Steckfittings gegenüber dem angeschlossenen Rohr ist es von Vorteil, wenn das Innenhülsenelement ein Dichtelement (beispielsweise in Form eines O-Rings aus gummielastischem Material) aufweist. Ferner ist es möglich, mehrere derartiger Dichtelemente an unterschiedlichen Stellen des Kontaktbereichs zwischen Rohr und Steckfitting vorzusehen. Insbesondere sollten die Dichtelemente oder zumindest eines der Dichtelemente derart angeordnet sein, dass den Durchlass des Steckfittings und das angeschlossene Rohr durchströmendes Fluid daran gehindert ist, in Kontakt mit den Elementen des Klemmmechanismus zu gelangen. Vom Durchlass aus betrachtet sollte also mindestens eines der Dichtelemente vor dem Klemmmechanismus angeordnet sein.

Die Erfindung wird nachfolgend anhand zweier Ausführungsbeispiele und unter Bezugnahme auf die Zeichnung näher erläutert. Im einzelnen zeigen dabei:
- Fig. 1: einen Halbschnitt durch einen Steckfitting gemäß einem ersten Aus- führungsbeispiel in dessen Ausgangsposition bei noch nicht ange- schlossenem Rohr,
- Fig. 2: einen Halbschnitt durch den Steckfitting gemäß Fig. 1 bei angeschlos- senem Rohr,
- Fig. 3: einen Halbschnitt durch einen Steckfitting gemäß einem zweiten Aus- führungsbeispiel der Erfindung im Ausgangszustand und ohne ange- schlossenes Rohr und
- Fig. 4: einen Halbschnitt durch den Steckfitting gemäß Fig. 3 bei angeschlos- senem Rohr.

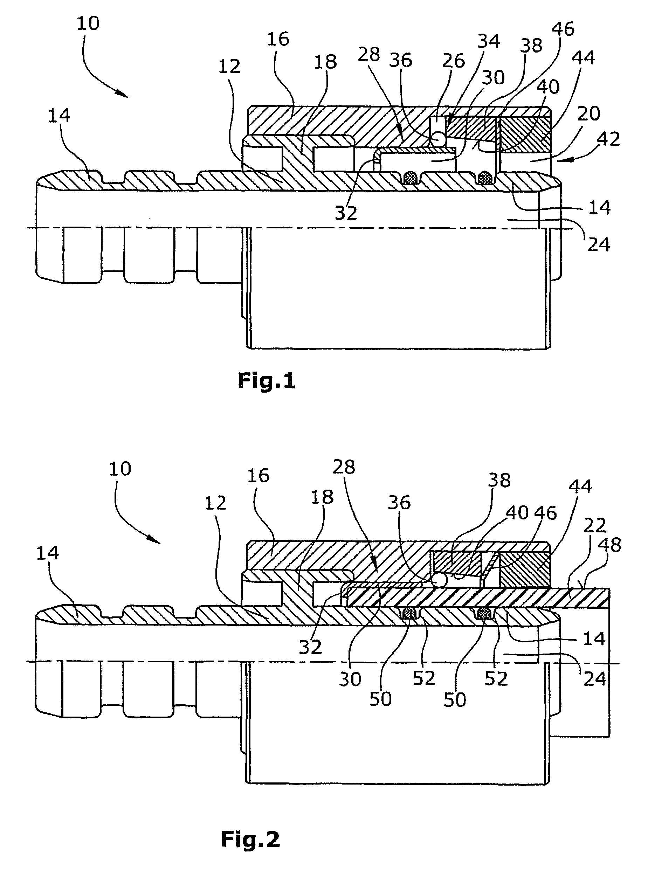

In den Fign. 1 und 2 sind Halbschnitte durch einen Steckfitting 10 gemäß einem ersten Ausführungsbeispiel der Erfindung gezeigt. Gemäß Fig. 1 weist der Steckfitting 10 einen Fittingkörper 12 auf, der in diesem Ausführungsbeispiel als Verbinder zum Verbinden zweier Rohre ausgebildet ist und zwei (Innen-)Hülsenelemente 14 aufweist. Eines der Innenhülsenelemente 14 ist von einem Außenhülsenelement 16 umgeben, das im wesentlichen koaxial zum Innenhülsenelement 14angeordnet ist und axial auf den Fittingkörper 12 aufgeschoben ist und mit diesem an einem Radialdistanzelement 18 verbunden ist. Zwischen dem Innenhülsenelement 14 und dem Außenhülsenelement 16 bildet sich ein Aufnahmeraum 20, in den ein anzuschließendes Rohr 22 eingeschoben werden kann (siehe Fig. 2). Durch das Innenhülsenelement 14 bzw. den Fittingkörper 12 hindurch erstreckt sich ein Durchlass 24, der bei angeschlossenem Rohr 22 in Fluidverbindung mit diesem steht. Bei dem Rohr 22 kann es sich um ein Rohr mit durchgängig aus Kunststoff bestehender Wandung oder aber auch um ein Rohr mit einer Metalllage an seiner Wandung handeln. Zweckmäßig ist es, wenn das Rohr ein Kunststoff-Metall-Verbundrohr ist, das eine beidseitig von Kunststoff umgebene innere Metalllage aufweist. Der Fittingkörper besteht z.B. aus Metall, einer Metalllegierung, Kunststoff (gegebenenfalls faserverstärkt) oder einem Kunststoff-Metall-Verbundwerkstoff.

Bei dem Ausführungsbeispiel gemäß den Fign. 1 und 2 ist der Mechanismus zur Zugentlastung und Fixierung des angeschlossenen Rohres 22 am Steckfitting 10 an der Innenseite des Außenhülsenelements 16 ausgebildet. Das Außenhülsenelement 16 weist zu diesem Zweck eine zum Ringraum 20 offene Aussparung 26 auf, die zum Ringraum 20 hin teilweise von einem Freigabeelement 28 überdeckt ist, das einen bandförmigen oder hülsenförmigen zylindrischen Teil 30 und einen davon abstehenden Mitnehmerteil 32 aufweist. In der Aussparung 26 befindet sich ein Klemmelement 34 in Form eines geschlitzten Klemmrings 36, der dann, wenn das Freigabeelement 28 mit seinem hülsenförmigen Teil 30 die Aussparung 26 zumindest teilweise überdeckt, von außen an dem hülsenförmigen Teil 30 anliegt. Dabei liegt der geschlitzte Klemmring 36 mit einer Vorspannkraft, die radial einwärts wirkt, von außen an dem Freigabeelement 28 an.

Ferner befindet sich in der Aussparung 26 ein ringförmiges Keilelement 38, das axial verschiebbar in der Aussparung 26 angeordnet ist und eine zum Ringraum 20 weisende Keilfläche 40 aufweist, die sich zum Klemmkörper 34 hin verjüngt. Das Keilelement 38 liegt im Ausgangszustand gemäß Fig. 1 zwischen dem Klemmkörper 34 und der Zugangsöffnung 42 des Aufnahmeraums 20.

Zum axialen Ende des Steckfittings 10 hin ist die Aussparung 26 durch ein ringförmiges Verschlusselement 44 abgeschlossen, das axial in die Aussparung 26 eingeschoben ist. An der dem Keilelement 38 zugewandten Seite des Verschlusselements 44 befindet sich ein Tellerfederelement 46, das in der Ausgangssituation gemäß Fig. 1 vorgespannt ist und eine axiale Kraft auf das Keilelement 38 ausübt. Da in diesem Zustand das Keilelement 38 in seiner axialen Bewegungsfreiheit durch den Klemmkörper 34 gehindert ist, verbleibt es in der Position gemäß Fig. 1.

Wird nun, wie in Fig. 2 gezeigt, ein Rohr 22 angeschlossen, so wird dieses zunächst über die Zugangsöffnung 42 in den Aufnahmeraum 20 eingeführt. Beim weiteren Vorbewegen des Rohres 22 kommt dieses in Kontakt mit dem Mitnehmerteil 32 des Freigabeelements 28, woraufhin das Freigabeelement 28 bei weiterem Vorschieben des Rohres 22 mitgenommen und somit axial verschoben wird. Dadurch wird das Freigabeelement 28 bis außerhalb des Bereichs der Aussparung 26 bewegt, so dass nun der Klemmkörper 34 freigegeben ist, der sich auf Grund seiner Vorspannung nunmehr mit Kraft von außen an die Außenseite 48 des Rohres 22 anlegt. Durch die radial einwärts gerichtete Bewegung des Klemmrings 36 wird nun das Keilelement 38 freigegeben, das sich auf Grund der Kraft des Tellerfederelements 46 axial nach vorne und damit außen über den Klemmring 36 bewegen kann. Diese Situation ist in Fig. 2 gezeigt. Damit ist der Klemmmechanismus aktiviert. Das angeschlossene Rohr 22 kann über Dichtelemente 50, die in Aufnahmenuten 52 des Innenhülsenelements 14 angeordnet sind, an dem Steckfitting 10 dicht anliegen. Wird nun ausgehend von Fig. 2 auf das angeschlossene Rohr 22 eine Zugkraft ausgeübt, so bewegt sich je nach Größe der Zugkraft das Rohr 22 zusammen mit dem außen am Rohr 22 fixierten Klemmring 36 aus dem Steckfitting 10 heraus bzw. in dieser Richtung wirkt ein Bewegungsmoment. Die Bewegung des Rohres 22 selbst wird dabei jedoch dadurch verhindert, dass nun auf Grund des Bewegungsmoments der Klemmring gegen die Keilfläche 40 drückt und über diese stärker gegen die Außenseite 48 des Rohres 22 gedrückt wird, was wiederum die Haltekräfte auf das Rohr 22 erhöht. Somit ist eine sichere Fixierung und Halterung, d.h. eine Sicherung des Rohres 22 vor einem Ablösen auf Grund von Zugkräften gegeben, und zwar ohne dass Beschädigungen des Rohres 22 zu befürchten sind.

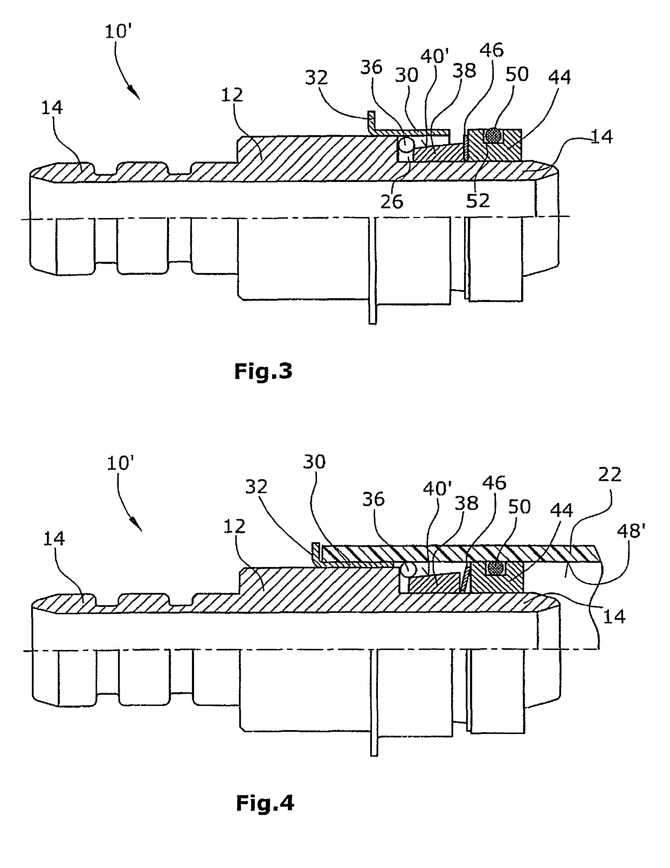

In den Fign. 3 und 4 sind Halbschnitte eines alternativ ausgebildeten Steckfittings 10' gezeigt. Der Steckfitting 10' unterscheidet sich von dem Steckfitting 10 der Fign. 1 und 2 dadurch, dass der Klemmmechanismus nunmehr an der Außenseite des Innenhülsenelements 14 angeordnet ist und das Außenhülsenelement nicht vorhanden ist. Soweit die einzelnen Elemente des Steckfittings 10' der Fign. 3 und 4 denen des Steckfittings 10 nach den Fign. 1 und 2 entsprechen bzw. mit diesen gleich (funktional und/oder konstruktiv) sind, sind sie in den Fign. 3 und 4 mit den gleichen Bezugszeichen versehen wie in den Fign. 1 und 2.

Der Aufbau des Klemmmechanismus des Steckfittings 10' der Fign. 3 und 4 ist in gewisser Weise spiegelbildlich zum Klemmmechanismus der Fign. 1 und 2. Auf Grund der Anordnung des Klemmmechanismus an dem Innenhülsenelement 14 drückt der Klemmring 36 auf Grund von Expansion gegen die Innenseite 48' des Rohres 22. Der Klemmring 36 wird im radial gestauchten Zustand von dem Freigabeelement 28 in der Aussparung 26 gehalten, wie es in Fig. 3 gezeigt ist. Nach axialer Verschiebung des Freigabeelements 28 (in Fig. 3 gezeigt) liegt dann der Klemmring 36 mit seiner Klemmkraft innen an dem Rohr 22 an. Das Keilelement 38, das bei nicht freigegebenem Klemmring 36 an diesem anliegt und damit unbeweglich ist, wird durch den sich radial nach außen bewegenden Klemmring 36 (bei Freigabe durch das Freigabeelement 28) seinerseits freigegeben, so dass es innerhalb der Aussparung 26 axial verschoben wird, und zwar durch das Tellerfederelement 46 und bis zur Anlage der Keilfläche 40' an dem Klemmring 36 (siehe Fig. 4).

## Patentansprüche

1. Steckfitting für ein Kunststoff aufweisendes Rohr, mit
- einem Fittingkörper (12), der einen Durchlass (24) für ein Medium und einen um den Durchlass (24) herum angeordneten, von dem Durchlass (24) durch ein Innenhülsenelement (14) des Fittingkörpers (12) getrennten, im wesentlichen ringförmigen Anschlussbereich (20) aufweist, auf oder in den das Ende eines anzuschließenden Rohres (22) auf- bzw. hineinschiebbar ist,
- einem Klemmkörper (34), der im oder am Fittingkörper (12) angeordnet ist und radial in Richtung auf den Anschlussbereich (20) vorgespannt ist,
- einem in dem Anschlussbereich (20) axial verschiebbar angeordneten Freigabeelement (28) zum Freigeben des Klemmkörpers (34),
- einem axial verschiebbar am Fittingkörper (12) gelagerten Keilelement (38) zur Anlage an dem Klemmkörper (34) und
- einem Federelement (46) zur axialen relativen Verschiebung von Klemmkörper (34) und Keilelement (38) bei freigegebenem Klemmkörper (34),
- wobei das Freigabeelement (28) einen Mitnehmerteil (32) für das anzuschließende Rohr (22) zur Mitnahme des Freigabeelements (28) durch das anzuschließende Rohr (22) beim Auf- oder Hineinschieben desselben auf bzw. in den Anschlussbereich (20) zwecks Freigabe des Klemmkörpers (34) und kraftschlüssiger Anlage desselben an dem anzuschließenden Rohr (22) aufweist.

2. Steckfitting nach Anspruch 1, **dadurch gekennzeichnet, dass** der Anschlussbereich als von dem Innenhülsenelement (14) und einem Außenhülsenelement (16) begrenzter Aufnahmeraum (20) gebildet ist und dass das Freigabeelement (28), der Klemmkörper (34), das Keilelement (38) und das Federelement (46) an dem Außenhülsenelement (16) angeordnet sind.

3. Steckfitting nach Anspruch 2, **dadurch gekennzeichnet, dass** der Klemmkörper (34) eine radial einwärts gerichtete Vorspannung aufweist.

4. Steckfitting nach Anspruch 1, **dadurch gekennzeichnet, dass** der Anschlussbereich (20) von dem Innenhülsenelement (14) gebildet ist und dass das Freigabeelement (28), der Klemmkörper (34), das Keilelement (38) und das Federelement (46) an dem Innenhülsenelement (14) angeordnet sind.

5. Steckfitting nach Anspruch 4, **dadurch gekennzeichnet, dass** der Klemmkörper (34) eine radial auswärts gerichtete Vorspannung aufweist.

6. Steckfitting nach einem der Ansprüche 1 bis 5, **dadurch gekennzeichnet, dass** das Innenhülsenelement (14) mindestens ein Dichtelement (50) zur dichtenden Anlage an dem anzuschließenden Rohr (22) aufweist.

7. Steckfitting nach Anspruch 4 und 6, **dadurch gekennzeichnet, dass** das mindestens eine Dichtelement (50) in Einschieberichtung des anzuschließenden Rohres (22) betrachtet vor dem Freigabeelement (28), dem Klemmkörper (34), dem Keilelement (38) und/oder dem Federelement (46) angeordnet ist.

8. Steckfitting nach einem der Ansprüche 1 bis 7, **dadurch gekennzeichnet, dass** der Klemmkörper (34) als ein geschlitzter Klemmring (36) ausgebildet ist.

## Claims

1. A plug-in fitting for a pipe comprising plastic material, comprising
- a fitting body (12) comprising a passage (24) for a medium and a substantially annular connection area (20) arranged so as to surround the passage (24) and separated from the passage (24) by an inner sleeve element (14) of the fitting body (12), the end of a pipe (22) to be connected being able to be pushed onto or into said connection area (20),
- a clamping body (34) which is arranged in or on the fitting body (12) and radially prestressed towards the connection area (20),
- a release element (28) which is arranged so as to be axially movable in the connection area (20) and serves for releasing the clamping body (34),
- a wedge element (38) which is supported on the fitting body (12) so as to be axially movable and rests against the clamping body (34) and
- a spring element (46) for axial relative displacement of the clamping body (34) and the wedge element (38) when the clamping body (34) is released,
- the release element (28) comprising a drive part (32) for the pipe (22) to be connected for entraining the release element (28) by the pipe (22) to be connected when the latter is pushed onto or into the connection area (20) for the purpose of releasing the clamping body (34) and providing a force-fit contact thereof with the pipe (22) to be connected.

2. The plug-in fitting according to claim 1, **characterized in that** the connection area (20) is realized as an accommodation space (20) delimited by the inner sleeve element (14) and an outer sleeve element (16), and the release element (28), the clamping body (34), the wedge element (38) and the spring element (46) are arranged on the outer sleeve element (16).

3. The plug-in fitting according to claim 2, **characterized in that** the clamping body (34) is prestressed in radially inward direction.

4. The plug-in fitting according to claim 1, **characterized in that** the connection area (20) is defined by the inner sleeve element (14), and the release element (28), the clamping body (34), the wedge element (38) and the spring element (46) are arranged on the inner sleeve element (14).

5. The plug-in fitting according to claim 4, **characterized in that** the clamping body (34) is prestressed in radially outward direction.

6. The plug-in fitting according to any of the claims 1 to 5, **characterized in that** the inner sleeve element (14) comprises at least one sealing element (50) for sealing contact with the pipe (22) to be connected.

7. The plug-in fitting according to claim 4 and 6, **characterized in that** the at least one sealing element (50) is arranged, as seen in the direction of insertion of the pipe (22) to be connected, in front of the release element (28), the clamping body (34), the wedge element (38) and/or the spring element (46).

8. The plug-in fitting according to any of the claims 1 to 7, **characterized in that** the clamping body (34) is realized as a slotted clamping ring (36).

## Revendications

1. Raccord de connexion pour un tuyau comprenant une matière synthétique, comportant
- un corps de raccord (12) qui présente un passage (24) pour un fluide et une zone de raccordement (20) sensiblement circulaire, disposée autour du passage (24), séparée du passage (24) par un élément de manchon intérieur (14) du corps de raccord (12) et sur ou dans laquelle l'extrémité d'un tuyau à raccorder (22) peut être emmanchée ou insérée,
- un corps de blocage (34) qui est disposé dans ou sur le corps de raccord (12) et qui est précontraint radialement en direction de la zone de raccordement (20),
- un élément de déblocage (28) disposé de manière axialement translatable dans la zone de raccordement (20) et destiné à débloquer le corps de blocage (34),
- un élément en coin (38) logé de manière axialement translatable sur le corps de raccord (12) et destiné à venir en contact sur le corps de blocage (34) et
- un élément ressort (46) pour la translation axiale relative du corps de blocage (34) et de l'élément en coin (38) lorsque le corps de blocage (34) est débloqué,
- l'élément de déblocage (28) présentant une partie d'entraînement (32) pour le tuyau à raccorder (22) en vue de l'entraînement de l'élément de déblocage (28) par le tuyau à raccorder (22) lors de l'emmanchement ou de l'insertion de celui-ci sur / dans la zone de raccordement (20) aux fins du déblocage du corps de blocage (34) et du contact en adhérence de celui-ci sur le tuyau à raccorder (22).

2. Raccord de connexion selon la revendication 1, **caractérisé en ce que** la zone de raccordement est constituée comme espace de réception (20) délimité par l'élément de manchon intérieur (14) et un élément de manchon extérieur (16) et **en ce que** l'élément de déblocage (28), le corps de blocage (34), l'élément en coin (38) et l'élément ressort (46) sont disposés sur l'élément de manchon extérieur (16).

3. Raccord de connexion selon la revendication 2, **caractérisé en ce que** le corps de blocage (34) présente une précontrainte radialement dirigée vers l'intérieur.

4. Raccord de connexion selon la revendication 1, **caractérisé en ce que** la zone de raccordement (20) est constituée par l'élément de manchon intérieur (14) et **en ce que** l'élément de déblocage (28), le corps de blocage (34), l'élément en coin (38) et l'élément ressort (46) sont disposés sur l'élément de manchon intérieur (14).

5. Raccord de connexion selon la revendication 4, **caractérisé en ce que** le corps de blocage (34) présente une précontrainte radialement dirigée vers l'extérieur.

6. Raccord de connexion selon l'une des revendications 1 à 5, **caractérisé en ce que** l'élément de manchon intérieur (14) présente au moins un élément d'étanchéité (50) destiné à venir en contact étanchéifiant sur le tuyau à raccorder (22).

7. Raccord de connexion selon les revendications 4 et 6, **caractérisé en ce que** l'au moins un élément d'étanchéité (50) est disposé devant l'élément de déblocage (28), le corps de blocage (34), l'élément en coin (38) et/ou l'élément ressort (46) en regardant dans le sens d'insertion du tuyau à raccorder (22).

8. Raccord de connexion selon l'une des revendications 1 à 7, **caractérisé en ce que** le corps de blocage (34) est constitué comme anneau de blocage fendu (36).
